# EUROPÄISCHE PATENTSCHRIFT

(11) **EP 2 798 166 B1**
(45) Veröffentlichungstag und Bekanntmachung des Hinweises auf die Patenterteilung: **07.06.2017**
(21) Anmeldenummer: 12813002.8
(22) Anmeldetag: 21.12.2012
(51) Int. Cl.: F01N 3/20

(54) **DOSIERMODUL UND ABGASNACHBEHANDLUNGSEINRICHTUNG**
METERING MODULE AND EXHAUST GAS AFTER-TREATMENT DEVICE
MODULE DE DOSAGE ET DISPOSITIF DE POST-TRAITEMENT DES GAZ D'ÉCHAPPEMENT

(30) Priorität: 27.12.2011 DE 102011089990
(43) Veröffentlichungstag der Anmeldung: 05.11.2014
(73) Patentinhaber: Robert Bosch GmbH, 70442 Stuttgart (DE)
(72) Erfinder: DÖHRING, Jochen, 70439 Stuttgart-Stammheim (DE)
(86) Internationale Anmeldenummer: PCT/EP2012/076705
(87) Internationale Veröffentlichungsnummer: WO 2013/098253

(56) Entgegenhaltungen:
- WO-A1-2008/017673
- DE-A1- 10 129 592

## Beschreibung

Die Erfindung betrifft ein Dosiermodul, insbesondere für eine Abgasnachbehandlungseinrichtung eines Kraftfahrzeugs, mit einem Dosierventil zum Einspritzen eines flüssigen Mediums, wobei dem Dosierventil ein Zulaufkanal für das einzuspritzende Medium zugeordnet ist, und wobei in den Zulaufkanal mindestens eine Frischluftkanal mündet, in welchem ein Rückschlagventil angeordnet ist.

Ferner betrifft die Erfindung eine Abgasnachbehandlungseinrichtung für ein Kraftfahrzeug, mit einem Abgasstrang, durch welchen Abgas einer Brennkraftmaschine des Kraftfahrzeugs geleitet wird, und mit einem dem Abgasstrang zugeordneten Dosiermodul zum Einspritzen von flüssigem Abgasnachbehandlungsmittel in das Abgas.

### Stand der Technik

Dosiermodule sowie Abgasnachbehandlungseinrichtungen der eingangs genannten Art sind aus dem Stand der Technik bereits bekannt. DE10129592A1 offenbart ein solches Dosiermodul. Um die Schadstoffemissionen von Brennkraftmaschinen im Kraftfahrzeugbau zu vermindern, ist es bekannt, dem Abgas ein Abgasnachbehandlungsmittel beispielsweise in Form einer wässrigen Harnstofflösung beizumischen, die dann in einem Katalysator mit dem Abgas zusammenwirkt beziehungsweise reagiert, um die Schadstoffe zu verringern. Üblicherweise wird dabei durch einen Zulaufkanal einem Dosierventil des Dosiermoduls das einzuspritzende Medium zugeführt. Um bei einem Abschalten des Systems zu gewährleisten, dass keine Flüssigkeit in dem Ventil verbleibt, die bei niedrigen Temperaturen gefrieren und zu einer Beschädigung des Ventils führen könnte, können Dosiermodule einen Frischluftkanal aufweisen, der in den Zulaufkanal mündet und ein Rückschlagventil aufweist. Wird das Dosiermodul durch eine Impulsentleerung deaktiviert, bei welcher die sich bis dahin in dem Dosiermodul befindliche Flüssigkeit durch einen Druckimpuls aus dem Dosierventil in Richtung des Zulaufkanals beziehungsweise entgegen der Einspritzförderrichtung getrieben wird, kann durch den Frischluftkanal Umgebungsluft in das Dosiermodul, insbesondere in das Dosierventil nachströmen, wodurch ein vollständiges Entfernen der Flüssigkeit ermöglicht wird. Das Rückschlagventil verhindert, dass im Normalbetrieb das Medium durch den Frischluftkanal aus dem Dosiermodul entweichen kann.

### Offenbarung der Erfindung

Das erfindungsgemäße Dosiermodul mit den Merkmalen des Anspruchs 1 hat den Vorteil, dass ein sicheres Entleeren des Dosierventils stets gewährleistet wird, indem das Nachströmen von einer ausreichenden Menge Frischluft zu jeder Zeit gewährleistet ist. Das erfindungsgemäße Dosiermodul zeichnet sich dadurch aus, dass der Frischluftkanal in einen Saugeinlass einer in dem Zulaufkanal angeordneten Strahlpumpe mündet. Erfindungsgemäß ist also vorgesehen, dass in dem Zulaufkanal eine Strahlpumpe angeordnet oder ausgebildet ist. Die Strahlpumpe weist zwei Einlässe und einen Auslass auf, wobei in einen der Einlässe das Medium zum Betreiben der Strahlpumpe getrieben wird, während der andere Einlass als Saugeinlass dem Frischluftkanal zugeordnet ist und dort einen Unterdruck erzeugt, wodurch Frischluft angesaugt und zusammen mit dem Medium dem Auslass zugeführt wird. Der eine Einlass ist somit dem Dosierventil, der Saugeinlass dem Frischluftkanal und der Auslass dem Zulaufkanal beziehungsweise dem vom Dosierventil abgewandten Abschnitt des Zulaufkanals zugeordnet. Die Strahlpumpe nutzt die Theorie der Strömung nach Bernoulli und Venturi. Erfindungsgemäß mündet der Frischluftkanal in den Saugeinlass, sodass die Frischluft angesaugt wird, wenn das einzuspritzende Medium beim Abschalten des Dosiermoduls aufgrund der Impulsrückspülung durch den anderen Einlass in Richtung des Auslasses gefördert wird. Dadurch wird eine größere Menge an Frischluft in das Dosierventil eingetrieben, wodurch der Entleerungsvorgang verbessert und beschleunigt wird. Erfindungsgemäß ist die Strahlpumpe also in Rückströmrichtung des Mediums in dem Zulaufkanal ausgerichtet, sodass diese bei der Impulsentleerung durch das rückströmende Medium angetrieben und dadurch die Frischluft angesaugt wird. Bevorzugt ist dabei das Rückschlagventil nahe zu dem Saugeinlass angeordnet. Durch die dadurch verbesserte Sogwirkung auf das Rückschlagventil beziehungsweise dessen Ventilkörper lässt sich das Rückschlagventil darüber hinaus leichter und schneller öffnen wie bisher.

Besonders bevorzugt ist zwischen dem Rückschlagventil und der Strahlpumpe in dem Frischluftkanal eine Drossel angeordnet. Die Drossel verringert den Durchströmungsquerschnitt für das von dem Frischluftkanal zur Strahlpumpe strömende Medium. Die Drossel erhöht lokal den Unterdruck deutlich, sodass das Rückschlagventil sich noch schneller öffnet und länger bei abnehmender Rückströmung geöffnet bleibt.

Vorzugsweise weist die Drossel eine kleinere Durchströmungsöffnung auf als der Saugeinlass der Strahlpumpe. Dadurch wird der Unterdruck weiter erhöht, wodurch sich auch eine verbesserte Auslegung einer gegebenenfalls vorgesehenen Rückschlagfeder und/oder weiterer Rückschlagventilkomponenten ergibt.

Vorzugsweise weist das Rückschlagventil als Ventilelement eine Kugel auf. Besonders bevorzugt ist der Kugel eine Rückstellfeder zugeordnet, die insbesondere zwischen der Drossel und der Kugel verspannt gehalten ist.

Vorzugsweise weist das Rückschlagventil die Drossel auf. Die so gebildete Vormontagegruppe kann auf einfache Art und Weise in den Frischluftkanal eingebracht werden.

Gemäß einer vorteilhaften Weiterbildung der Erfindung ist vorgesehen, dass das Rückschlagventil eine die Drossel bildende Hülse aufweist. Die Hülse ist vorzugsweise derart ausgebildet, dass sie gleichzeitig die Halterung für die Rückstellfeder und die Kugel bildet. Die Hülse ist dazu an einem entsprechenden Rückschlagventilkörper fest angeordnet, um die Kugel gegen eine in dem Rückschlagventil ausgebildete Durchströmungsöffnung mittels der Rückstellfeder zu pressen. Vorzugsweise ist die Hülse derart ausgebildet, dass sie von dem Rückschlagventilkörper ausgehend ihren Durchmesser bis zu der Drossel hin verjüngt. Dies kann kontinuierlich oder in einer oder mehreren Stufen erfolgen.

Die erfindungsgemäße Abgasnachbehandlungseinrichtung mit den Merkmalen des Anspruchs 9 zeichnet sich durch ein Dosiermodul aus, wie es obenstehend beschrieben wurde, und führt zu den oben genannten Vorteilen.

Im Folgenden soll die Erfindung anhand der Zeichnung näher erläutert werden. Dazu zeigen:
- Figur 1: ein Dosiermodul in einer Schnittdarstellung,
- Figur 2: eine Prinzipskizze einer Strahlpumpe des Dosiermoduls und
- Figur 3: eine Einbausituation der Strahlpumpe in dem Dosiermodul.

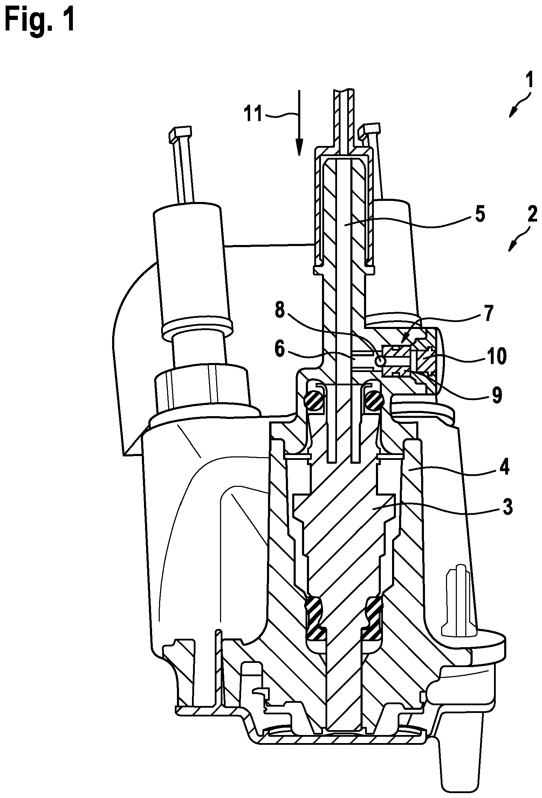

Figur 1 zeigt ein Dosiermodul 1 einer Abgasnachbehandlungseinrichtung 2 eines hier nicht näher dargestellten Kraftfahrzeuges. Das Dosiermodul 1 ist einem Abgasrohr eines Abgasstrangs zugeordnet, um mittels eines stark vereinfacht dargestellten Dosierventils 3 flüssiges Abgasnachbehandlungsmittel in das durch das Abgasrohr strömende Abgas einer Brennkraftmaschine des Kraftfahrzeuges einzuspritzen, sodass dieses zusammen mit dem Abgas in einem stromabwärts gelegenen Katalysator zur Reduktion von Schadstoffemissionen reagiert.

Das Dosiermodul 1 weist ferner ein das Dosierventil 3 im Wesentlichen aufnehmendes Gehäuse 4 auf, das einen Zulaufkanal 5 bildet, welcher zu einem Einlass des Dosierventils 3 führt, um dem Dosierventil 3 das einzuspritzende Medium zuzuführen. In den Zulaufkanal 5 mündet seitlich ein Frischluftkanal 6, durch welchen Frischluft aus der Umgebung in den Zulaufkanal 5 strömen kann. In dem Frischluftkanal 6 ist ein Rückschlagventil 7 angeordnet, das den Frischluftkanal 6 automatisch verschließt, wenn ein Druckabfall über das Rückschlagventil einen Grenzwert überschreitet, und öffnet, wenn der Druckabfall den Grenzwert unterschreitet. Hierzu weist das Rückschlagventil 7 als Ventilelement eine Kugel 8 auf, die mittels einer hier aus Übersichtlichkeitsgründen nicht dargestellten Rückstellfeder in einen Ventilsitz an einem Rückschlagventilkörper 9 gepresst wird. Dadurch verschließt die Kugel 8 eine in dem Rückschlagventilkörper 9 ausgebildete Durchströmungsöffnung. Das Rückschlagventil 7 ist derart ausgebildet, dass die Rückstellfeder den Druck in dem Zulaufkanal 5 unterstützend die Kugel 8 entgegen der Einströmrichtung der Frischluft in den Ventilsitz drängt. An seinem dem Zulaufkanal 5 gegenüberliegenden Ende weist der Frischluftkanal 6 einen Luftfilter 10 auf, der das Eindringen von Partikeln in das Dosiermodul 1 verhindert, wenn Umgebungsluft durch den Frischluftkanal 6 einströmt.

Im Betrieb wird dem Dosierventil 3 das einzuspritzende Medium durch den Zulaufkanal 5 in Richtung des Pfeils 11 zugeführt, sodass das Dosierventil 3 stets mit dem flüssigen Medium gefüllt ist. Da bei niedrigen Temperaturen unterhalb des Gefrierpunktes des Mediums das Gefrieren des Mediums zu Beschädigungen an dem Dosierventil 3 führen könnte, wird die Flüssigkeit beziehungsweise das Medium aus dem Dosierventil 3 entfernt, wenn es deaktiviert wird. Hierzu ist eine sogenannte Impulsentleerung vorgesehen, bei welcher durch plötzliches Schließen des Dosierventils 3 ein Druckimpuls dafür sorgt, dass das im Dosierventil 3 befindliche Medium aus dem Dosierventil 3 in Richtung des Zulaufkanals 5 heraus- beziehungsweise zurückgespült wird. Unterschreitet dabei der Druckabfall den genannten Grenzwert, öffnet das Rückschlagventil 7 und es strömt Frischluft durch den Frischluftkanal 6 in den Zulaufkanal 5 ein beziehungsweise nach. Die Frischluft kann im Normalbetrieb auch dazu dienen, ein Luftpolster zu bieten, welches den im System erhöhten Druck aufgrund von Eisbildung aufnehmen kann.

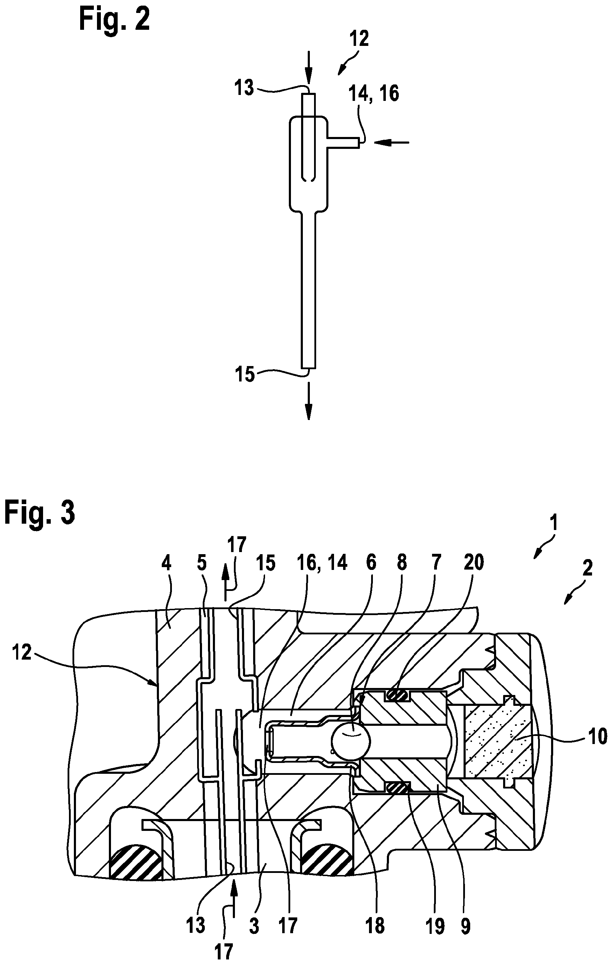

In das Dosiermodul 1 ist erfindungsgemäß eine Strahlpumpe 12 integriert angeordnet, wie sie skizziert in Figur 2 dargestellt ist. Die Strahlpumpe 12 weist wie üblich zwei Eingänge 13,14 sowie einen Ausgang 15 auf. Ein in den Eingang 13 getriebenes flüssiges Medium führt zu einer Sogwirkung an dem Einlass 14, sodass durch den Einlass 14 ein weiteres Medium angesaugt und beide Medien zusammen dem Ausgang 15 zugeführt werden. Das in den Einlass 13 geförderte Medium dient somit als Treib- beziehungsweise Betriebsmedium, welches das weitere Medium ansaugt. Hierbei werden die Strömungstheorien von Bernoulli und Venturi ausgenutzt. Am Einlass 13 tritt das eine Medium, in diesem Fall das einzuspritzende Medium unter einem bestimmten Leitungsdruck aus einer Düse in einen Raum mit größerem Durchmesser. Zwischen dem schnell strömenden Medium und dem umgebenden Medium, der Frischluft, entstehen durch Reibung Verwirbelungen und in der Folge eine Vermischung der Medien. Bei diesem Vorgang wird kinetische Energie vom Betriebsmedium auf das umgebende Medium übertragen, womit ein effektiver Fördermechanismus gebildet wird. Durch das Ausfördern des Betriebsmediums entsteht somit ein Unterdruck an dem Einlass 14, wodurch Frischluft angesaugt wird. Der Einlass 13 ist also dem Zulaufkanal 5 und der Einlass 14 dem Frischluftkanal 6 zugeordnet, wobei der Einlass 14 einen Saugeinlass 16 für die Frischluft bildet.

Figur 3 zeigt skizziert die Einbausituation der Strahlpumpe 12 in dem Dosiermodul 1. Der Einlass 13 ist dem Dosierventil 3 zugeordnet, während der Ausgang 15 dem Eingang beziehungsweise einem dem Dosierventil abgewandten Abschnitt des Zuluftkanals 5 zugeordnet ist. Der Saugeinlass 16 ist dem Frischluftkanal 6 zugeordnet. Bei einer Impulsleerung des Dosierventils 3 wird das in dem Dosierventil 3 befindliche Medium entgegen der Normalbetrieb-Förderrichtung gemäß Pfeil 11 in Richtung eines Pfeils 17 durch die Strahlpumpe 12 getrieben. Aufgrund der oben beschriebenen Wirkungsweise wird dadurch an dem Saugeinlass 16 ein Unterdruck erzeugt, der dazu führt, dass das Rückschlagventil 7 geöffnet wird. Dabei wird die Kugel 8 entgegen der Kraft der Rückstellfeder von dem Ventilsitz gelöst, sodass Frischluft durch das Rückschlagventil 7 nachströmen beziehungsweise in Richtung des Saugeinlasses 16 strömen kann. Solange der Unterdruck an dem Saugeinlass 16 ausreichend hoch ist, bleibt das Rückschlagventil 7 geöffnet.

Um die Sogwirkung auf das Rückschlagventil 7 zu erhöhen, ist dem Frischluftkanal 6, wie in Figur 3 gezeigt, eine Drossel 17 zugeordnet. Die Drossel 17 weist einen kleineren Durchströmungsquerschnitt als der Saugeinlass 16 auf. Die Drossel 17 ist zwischen der Kugel 8 und dem Saugeinlass 16 in dem Frischluftkanal 6 angeordnet. Dadurch, dass der Frischluftkanal 6 aus einer kleineren Öffnung in eine größere Öffnung des Saugeinlasses 16 der Strahlpumpe 12 mündet, wird der Unterdruck lokal deutlich erhöht, sodass das Rückschlagventil 7 leichter beziehungsweise früher geöffnet wird und länger geöffnet bleibt, wodurch das Nachströmen eines für die Entleerung notwendiges Frischluftvolumen gewährleistet wird. Außerdem ergeben sich Vorteile bei der Auslegung der Rückstellfeder und gegebenenfalls weiterer Komponenten des Rückschlagventils 7.

Gemäß dem vorliegenden Ausführungsbeispiel wird die Drossel 17 von einer Hülse 18 des Rückschlagventils 7 gebildet. Die Hülse 18 ist an dem Rückschlagventilkörper 9 derart befestigt, dass sie die Kugel 8 sowie die Rückstellfeder einhaust. Die Rückstellfeder stützt sich somit an der Hülse 18 ab, um die Kugel 8 an den Ventilsitz des Rückschlagventilkörpers 9 zu drängen. Wie in Figur 3 dargestellt, verjüngt sich der Querschnitt der Hülse 18 von dem Rückschlagventilkörper 9 ausgehend bis zu der Drossel 17, wobei im vorliegenden Ausführungsbeispiel die Querschnittsverjüngung in zwei Stufen erfolgt. Natürlich ist es auch denkbar, weitere Stufen vorzusehen oder eine kontinuierliche Querschnittsverjüngung auszubilden.

Durch die Hülse 18 bildet die Drossel 17 auf einfache Art und Weise einen Bestandteil des Rückschlagventils 7, sodass das Rückschlagventil 7 und Drossel 17 als Baugruppe vormontiert und gemeinsam in den Frischluftkanal 6 eingebracht werden können. Vorteilhafterweise weist der Rückschlagventilkörper 9 in seiner Mantelaußenfläche eine nutartige Vertiefung 19 auf, die sich über seinen Umfang erstreckt und zur Aufnahme eines Dichtelementes 20 dient, das insbesondere als Dichtring beziehungsweise O-Ring ausgebildet ist und zwischen dem Rückschlagventilkörper 9 und der Mantelaußenwand des Frischluftkanals 6 in dem Gehäuse 4 verpresst ist.

Vorteilhafterweise ist das Rückschlagventil 7 selbst eisdruckfest ausgebildet, um das Dosierventil 3 bei zurückfließendem Medium beim Abstellfall zu schützen. Besonders bevorzugt wird das Rückschlagventil 7 derart angeordnet und/oder der Frischluftkanal 6 derart geformt oder ausgerichtet, dass die Eisdruckfestigkeit des Rückschlagventils 7 gewährleistet wird.

Die vorteilhafte Ausbildung des Dosiermoduls 1 führt dazu, dass die angesaugte Luftmenge erhöht und die Eisdruckfestigkeit des Dosiermoduls 1 verbessert wird.

## Patentansprüche

1. Dosiermodul (1), insbesondere für eine Abgasnachbehandlungseinrichtung (2) eines Kraftfahrzeugs, mit einem Dosierventil (3) zum Einspritzen eines flüssigen Mediums, wobei dem Dosierventil (3) ein Zulaufkanal (5) für das einzuspritzende Medium zugeordnet ist, und wobei in den Zulaufkanal (5) mindestens ein Frischluftkanal (6) mündet, in welchem ein Rückschlagventil (7) angeordnet ist, **dadurch gekennzeichnet, dass** der Frischluftkanal (6) in einen Saugeinlass (16) einer in dem Zulaufkanal (5) angeordneten Strahlpumpe (12) mündet, wobei die Strahlpumpe (12) in Rückströmrichtung des Mediums in dem Zulaufkanal (5) ausgerichtet ist, wobei der Zulaufkanal zu einem Einlass des Dosierventils führt um dem Dosierventil das einzuspritzende Medium zuzuführen.

2. Dosiermodul nach Anspruch 1, **dadurch gekennzeichnet, dass** zwischen dem Rückschlagventil (7) und der Strahlpumpe (12) in dem Frischluftkanal (6) eine Drossel (17) angeordnet ist.

3. Dosiermodul nach Anspruch 2, **dadurch gekennzeichnet, dass** die Drossel (17) eine kleinere Durchströmungsöffnung aufweist als der Saugeinlass (16) der Strahlpumpe (12).

4. Dosiermodul nach einem der vorhergehenden Ansprüche, **dadurch gekennzeichnet, dass** das Rückschlagventil (7) als Ventilelement eine Kugel (8) aufweist.

5. Dosiermodul nach Anspruch 4, **dadurch gekennzeichnet, dass** der Kugel (8) eine Rückstellfeder zugeordnet ist.

6. Dosiermodul nach einem der Ansprüche 2-5, **dadurch gekennzeichnet, dass** das Rückschlagventil (7) die Drossel (17) aufweist.

7. Dosiermodul nach einem der Ansprüche 2-6, **dadurch gekennzeichnet, dass** das Rückschlagventil (7) eine die Drossel (17) bildende Hülse (18) aufweist.

8. Abgasnachbehandlungseinrichtung (2) für ein Kraftfahrzeug, mit einem Abgasstrang, durch welchen Abgas einer Brennkraftmaschine des Kraftfahrzeugs geleitet wird, und mit einem dem Abgasstrang zugeordneten Dosiermodul (1) zum Einspritzen von flüssigem Abgasnachbehandlungsmittel in das Abgas, **gekennzeichnet durch** die Ausbildung des Dosiermoduls (1) nach einem oder mehreren der vorhergehenden Ansprüche.

## Claims

1. Dosing module (1), in particular for an exhaust-gas aftertreatment device (2) of a motor vehicle, having a dosing valve (3) for injecting a liquid medium, wherein the dosing valve (3) is assigned an inflow duct (5) for the medium for injection, and wherein at least one fresh-air duct (6), in which a check valve (7) is arranged, opens into the inflow duct (5), **characterized in that** the fresh-air duct (6) opens into a suction inlet (16) of a jet pump (12) arranged in the inflow duct (5), wherein the jet pump (12) is oriented in the backflow direction of the medium in the inflow duct (5), wherein the inflow duct leads to an inlet of the dosing valve in order to supply the medium for injection to the dosing valve.

2. Dosing module according to Claim 1, **characterized in that** a throttle (17) is arranged in the fresh-air duct (6) between the check valve (7) and the jet pump (12).

3. Dosing module according to Claim 2, **characterized in that** the throttle (17) has a smaller throughflow opening than the suction inlet (16) of the jet pump (12).

4. Dosing module according to one of the preceding claims, **characterized in that** the check valve (7) has a ball (8) as valve element.

5. Dosing module according to Claim 4, **characterized in that** the ball (8) is assigned a restoring spring.

6. Dosing module according to one of Claims 2-5, **characterized in that** the check valve (7) has the throttle (17).

7. Dosing module according to one of Claims 2-6, **characterized in that** the check valve (7) has a sleeve (18) which forms the throttle (17).

8. Exhaust-gas aftertreatment device (2) for a motor vehicle, having an exhaust tract through which exhaust gas of an internal combustion engine of the motor vehicle is conducted, and having a dosing module (1) which is assigned to the exhaust tract and which serves for the injection of liquid exhaust-gas aftertreatment medium into the exhaust gas, **characterized by** the embodiment of the dosing module (1) according to one or more of the preceding claims.

## Revendications

1. Module de dosage (1), en particulier pour un dispositif de post-traitement des gaz d'échappement (2) d'un véhicule automobile, comprenant une soupape de dosage (3) pour l'injection d'un milieu fluide, un conduit d'amenée (5) pour le milieu à injecter étant associé à la soupape de dosage (3), et au moins un conduit d'air frais (6) débouchant dans le conduit d'amenée (5), dans lequel conduit d'air frais est disposé un clapet antiretour (7),
**caractérisé en ce que** le conduit d'air frais (6) débouche dans une entrée d'aspiration (16) d'une pompe à jet (12) disposée dans le conduit d'amenée (5), la pompe à jet (12) étant orientée dans la direction du reflux du milieu dans le conduit d'amenée (5), le conduit d'amenée conduisant à une entrée de la soupape de dosage afin d'acheminer le milieu à injecter à la soupape de dosage.

2. Module de dosage selon la revendication 1, **caractérisé en ce qu'**un étranglement (17) est disposé dans le conduit d'air frais (6) entre le clapet antiretour (7) et la pompe à jet (12).

3. Module de dosage selon la revendication 2, **caractérisé en ce que** l'étranglement (17) présente une ouverture de passage d'écoulement plus petite que l'entrée d'aspiration (16) de la pompe à jet (12).

4. Module de dosage selon l'une quelconque des revendications précédentes,
**caractérisé en ce que** le clapet antiretour (7) présente, en tant qu'élément de soupape, une bille (8).

5. Module de dosage selon la revendication 4,
**caractérisé en ce qu'**à la bille (8) est associé un ressort de rappel.

6. Module de dosage selon l'une quelconque des revendications 2 à 5,
**caractérisé en ce que** le clapet antiretour (7) présente l'étranglement (17).

7. Module de dosage selon l'une quelconque des revendications 2 à 6,
**caractérisé en ce que** le clapet antiretour (7) présente une douille (18) formant l'étranglement (17).

8. Dispositif de post-traitement des gaz d'échappement (2) pour un véhicule automobile, comprenant une ligne d'échappement à travers laquelle est guidé du gaz d'échappement d'un moteur à combustion interne du véhicule automobile, comprenant un module de dosage (1) associé à la ligne d'échappement pour l'injection d'un agent de post-traitement de gaz d'échappement fluide dans le gaz d'échappement, **caractérisé par** la réalisation du module de dosage (1) selon l'une quelconque ou plusieurs des revendications précédentes.
